# EUROPÄISCHE PATENTSCHRIFT

(11) **EP 3 779 367 B1**
(45) Veröffentlichungstag und Bekanntmachung des Hinweises auf die Patenterteilung: **18.12.2024**
(21) Anmeldenummer: 20189289.0
(22) Anmeldetag: 04.08.2020
(51) Int. Cl.: G01D 5/14, G01D 11/30, G01P 1/02, G01P 3/487

(54) **VORRICHTUNG ZUR MESSUNG DER WINKELSTELLUNG EINER WELLE**
DEVICE FOR MEASURING THE INCLINATION OF A SHAFT
DISPOSITIF DE MESURE DE LA POSITION ANGULAIRE D'UN ARBRE

(30) Priorität: 16.08.2019 DE 102019122046
(43) Veröffentlichungstag der Anmeldung: 17.02.2021
(73) Patentinhaber: Infineon Technologies AG, 85579 Neubiberg (DE)
(72) Erfinder: SLAMA, Peter, 9020 Klagenfurt (AT)
(74) Vertreter: Westphal, Mussgnug & Partner, Patentanwälte mbB

(56) Entgegenhaltungen:
- EP-A1- 3 109 599
- DE-A1- 10 212 859
- DE-A1- 102017 104 206
- DE-A1- 102017 212 039

## Beschreibung

### TECHNISCHES GEBIET

Die vorliegende Beschreibung betrifft das Gebiet der Winkelmesssysteme, die beispielsweise zur Messung der Winkelposition von Wellen eingesetzt werden können.

### HINTERGRUND

Beispielsweise für die Steuerung von Elektromotoren werden Messsysteme zur Messung der Winkelstellung der Motorwelle benötigt. Derartige Messsysteme basierend häufig auf der Detektion eines rotierenden Magnetfelds und beinhalten üblicherweise (unter anderem) einen oder mehrere Permanentmagneten, welche mit der Welle verbunden sind und daher mit dieser mitrotieren, sowie einen oder mehrere Magnetfeldsensoren zur Erfassung des resultierenden Magnetfeldes. Eine der Erfindung zugrunde liegende Aufgabe kann darin gesehen werden, bestehende Sensorsysteme effizienter zu gestalten (z.B. im Hinblick auf Kosten, Montage, Zahl der Teile, Reduktion des Bauraumes oder ähnliches).

Drehwinkelmesseinrichtungen für Elektromotoren sind beispielweise aus den Publikationen DE 10 2017 104 206 A1, DE 10 2017 212 039 und DE 102 12 859A1 A1 bekannt.

### ZUSAMMENFASSUNG

Die oben genannte Aufgabe wird durch eine Vorrichtung gemäß Anspruch 1 gelöst. Verschiedene Ausführungsformen und Weiterentwicklungen sind Gegenstand der abhängigen Ansprüche.

Im Folgenden wird eine Vorrichtung zur Messung der Winkelstellung oder der Drehbewegung einer Welle beschrieben. Gemäß einem Ausführungsbeispiel weist die Vorrichtung ein erstes Gehäuseteil sowie eine in dem ersten Gehäuseteil angeordnete und um eine Rotationsachse drehbare Welle auf. Die Welle weist eine Bohrung auf, die sich von einer Stirnseite der Welle entlang der Rotationsachse in die Welle hinein erstreckt. Im Falle einer Hohlwelle ist die erwähnte Bohrung ein Durchgangsloch. Die Vorrichtung umfasst weiter eine Magneteinheit mit mindestens einem Permanentmagneten, der innerhalb der Bohrung angeordnet und an der Welle befestigt ist, ein zweites Gehäuseteil mit einem Vorsprung, der sich entlang der Rotationsachse in die Bohrung hinein erstreckt, sowie eine Sensoreinheit, die ein auf einem Träger angeordnetes Magnetfeld-Sensorelement umfasst, wobei der Träger im Inneren des Vorsprungs des zweiten Gehäuseteils angeordnet ist. Der Vorsprung ist ein integraler Bestandteil des zweiten Gehäuseteils. Der Vorsprung ist hohl und das Magnetfeld-Sensorelement ist in dem hohlen Vorsprung angeordnet. Das zweite Gehäuseteil bildet einen Gehäusedeckel für das erste Gehäuseteil und weist eine zentrale Öffnung auf, durch welche die Sensoreinheit gesteckt werden kann.

### KURZE BESCHREIBUNG DER ZEICHNUNGEN

Nachfolgend werden Ausführungsbeispiele anhand von Abbildungen näher erläutert. Die Darstellungen sind nicht zwangsläufig maßstabsgetreu und die Ausführungsbeispiele sind nicht nur auf die dargestellten Aspekte beschränkt. Vielmehr wird Wert darauf gelegt, die den Ausführungsbeispielen zugrunde liegenden Prinzipien darzustellen. Zu den Abbildungen:
Figur 1 illustriert ein Beispiel eines magnetischen Sensors, der am Ende einer Welle in einer zentralen axialen Bohrung der Welle angeordnet ist; der Sensor kann durch eine Öffnung im Gehäuse in die zentrale axiale Bohrung eingeschoben werden.
Figur 2 ist ein Blockschaltbild, das exemplarisch eine Ansteuereinheit für einen Elektromotor zeigt, beispielsweise einen Stromrichter für einen bürstenlosen Gleichstrommotor.
Figur 3 illustriert ein Ausführungsbeispiel mit in einem Gehäusedeckel integrierten magnetischen Sensor.
Figur 4 illustriert ein Ausführungsbeispiel ähnlich wie Fig. 3, jedoch dient in diesem Fall die Ansteuereinheit für den Elektromotor als Gehäusedeckel, was eine noch kompaktere Bauweise ermöglicht.
Figur 5 illustriert eine Modifikation des Beispiels aus Fig. 4, welche nicht durch die Ansprüche gedeckt ist.

### DETAILLIERTE BESCHREIBUNG

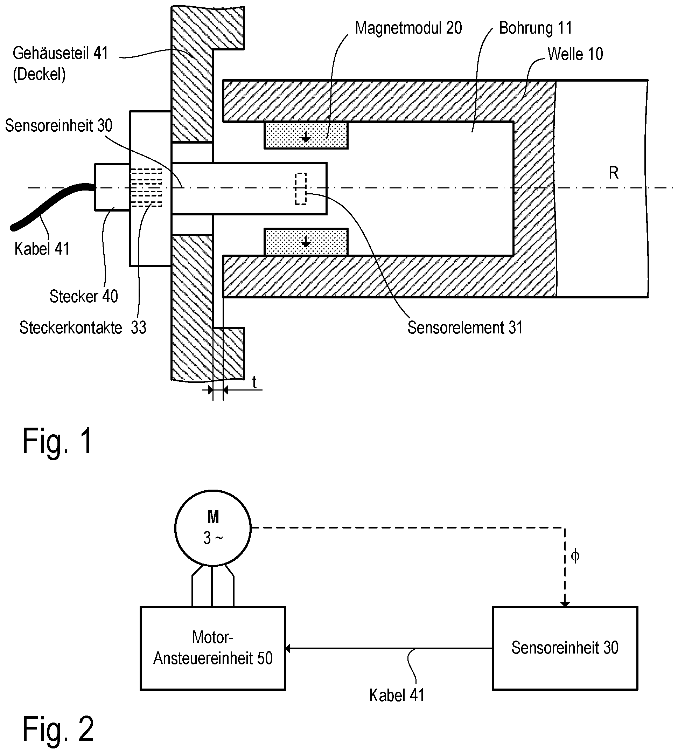

Fig. 1 beschreibt ein mit einer Welle gekoppeltes Sensorsystem zur Messung der Winkelstellung (*angular position*) und/oder der Drehgeschwindigkeit (*angular velocity*) einer in einem Gehäuse gelagerten Welle, insbesondere einer Motorwelle eines Elektromotors. Der Elektromotor kann beispielsweise ein Permanentmagnet-Synchronmotor (PMSM) sein, der oft auch als bürstenloser Gleichstrommotor (*brushless DC motor*) bezeichnet wird. Der Aufbau derartiger Motoren ist grundsätzlich bekannt und deshalb in Fig. 1 nicht dargestellt, um die Darstellung einfach zu halten.

Fig. 1 zeigt eine, in einem Gehäuse angeordnete Welle 10, die um eine Rotationsachse R drehbar gelagert ist (beispielsweise die Motorwelle eines Elektromotors). Die Welle 10 weist eine axiale Bohrung 11 auf, d.h. die Bohrung 11 erstreckt sich entlang der Rotationsachse R ausgehend von der Stirnseite der Welle 11 in die Welle 11 hinein. Die Bohrung 11 kann ein Sackloch oder ein Durchgangsloch sein. Im Falle eines Durchgangslochs ist die Welle 10 eine Hohlwelle. Innerhalb der Bohrung 11 ist eine Magneteinheit 20 angeordnet, welche an der Welle 10 befestigt ist und somit mit dieser mitrotiert. Die Magneteinheit 20 weist mindestens einen Permanentmagneten auf. In Fig. 1 ist nur ein Teil des Gehäuses dargestellt, nämlich ein Gehäusedeckel 41, welcher ungefähr ein einer Ebene liegt, die rechtwinklig auf die Rotationsachse steht. Zwischen der Stirnseite der Welle 10 und der Innenseite des Gehäusedeckels kann ein kleiner Spalt liegen (Spaltbreite t). Es sind verschiedene Bauform der Magneteinheit 20 an sich bekannt. Für die hier beschriebenen Beispiele ist die konkrete Implementierung der Magneteinheit 20 an sich bekannt und wird daher hier nicht weiter diskutiert.

Der Gehäusedeckel 41 weist eine zentrale Öffnung auf, durch die eine Sensoreinheit 30 gesteckt werden kann. Ein Teil der Sensoreinheit 30 weist eine längliche Form auf (z.B. eine zylindrische Form). Dieser Teil liegt ungefähr auf der Rotationsachse Rund wird beim Durchstecken der Sensoreinheit 30 durch die Öffnung im Gehäusedeckel 41 in die Bohrung 11 eingeführt. Die Sensoreinheit 30 kann am Gehäusedeckel 41 befestigt werden. Beispielsweise wird die Sensoreinheit mit dem Gehäusedeckel 41 verklebt oder mittels Schrauben befestigt.

Im Inneren der Sensoreinheit 30 befinden sich ein oder mehrere Sensorelemente 31, welche empfindlich auf das von der Magneteinheit 21 erzeugte Magnetfeld sind, welches mit der Welle 10 mitrotiert. Des Weiteren kann die Sensoreinheit 30 Sensorelektronik zur Ansteuerung der Sensorelemente 31 und zur (Vor-) Verarbeitung der Sensorsignale enthalten (was jedoch nicht notwendigerweise der Fall sein muss). In dem in Fig. 1 dargestellten Beispiel weist die Sensoreinheit 30 eine Buchse mit elektrischen Kontakten 33 auf, die eine Steckverbindung mit einem Stecker 402 ermöglichen. Mit Hilfe des Steckers 40 kann ein Kabel 41 mit der Sensorelektronik im Inneren der Sensoreinheit 30 verbunden werden. Das Sensorsystem umfassend die Sensoreinheit 30 und die mit der Welle 10 mitrotierende Magneteinheit 20 erlaubt eine Messung der Winkelposition der Welle 10. Aus gemessenen Winkelpositionen kann die Winkelgeschwindigkeit und/oder die Winkelbeschleunigung der Welle abgeleitet werden.

Das Blockschaltbild in Fig. 2 illustriert schematisch einen Elektromotor M mit einer Sensoreinheit 30 zur Messung der Winkelstellung φ der Motorwelle. Die Sensoreinheit 30 ist über das Kabel 41 mit der Ansteuereinheit 50 verbunden, die die Elektronik zur Ansteuerung des Elektromotors M enthält. Die Elektronik zur Ansteuerung des Elektromotors M beinhaltet beispielsweise einen Stromrichter (z.B. einen 3-Phasen-Inverter), Gate-Treiberschaltungen zum Ansteuern der in dem Stromrichter enthaltenen Leistungstransistoren, einen Mikrocontroller zur Erzeugung der Steuersignale für die Gate-Treiberschaltungen (u.a. basierend auf den von der Sensoreinheit 30 empfangenen Informationen über die Winkelstellung φ des Motorwelle), etc.

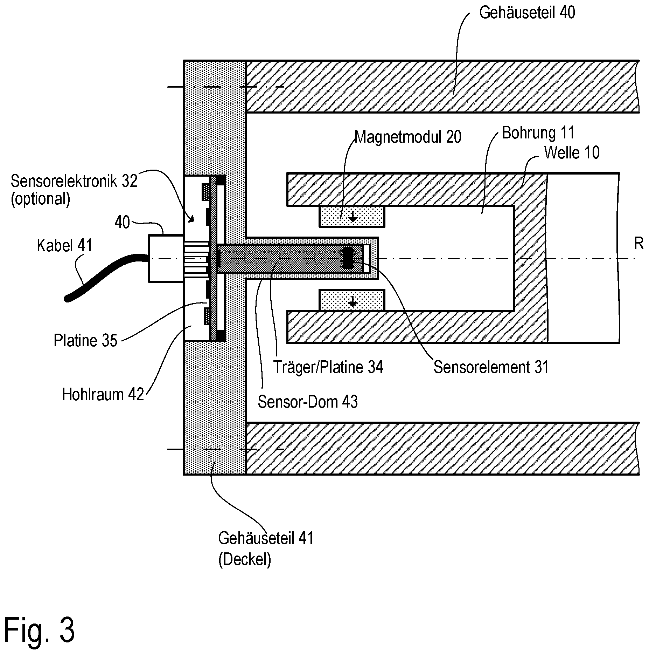

Fig. 3 illustriert ein Ausführungsbeispiel einer in das Motorgehäuse integrierten Sensoreinheit zur Messung der Winkelstellung φ einer Welle 10. An dieser Stelle sei vorausgeschickt dass aus Gründen einer einfachen Darstellung in Fig. 3 die Welle 10 in Relation zum Gehäuse relativ groß gezeichnet ist. Die in Fig. 3 dargestellten Elemente sind nicht maßstabsgetreu. Ähnlich wie in dem Beispiel aus Fig. 1 weist die Welle 10 eine axiale Bohrung 11 entlang der Rotationsache R auf, und im Inneren der Bohrung 11 ist eine Magneteinheit 20 montiert, die mit der Welle 10 mitrotiert und folglich ein mit der Welle mitrotierendes Magnetfeld erzeugt. Die Magneteinheit 20 umfasst mindestens einen Permanentmagneten, der beispielsweise ein diametral verlaufendes Magnetfeld erzeugt (die Richtung des Feldes ist in Fig. 3 durch die Pfeile angedeutet).

Der Elektromotor ist in einem ersten Gehäuseteil 40 angeordnet, welches seitlich mittels eines zweiten Gehäuseteils 41 verschlossen werden kann. Das zweite Gehäuseteil 41 wird im Folgenden als Gehäusedeckel bezeichnet. Der Gehäusedeckel kann einen Hohlraum 42 aufweisen, und weist einen langgestreckten, z.B. prismenförmigen (oder zylinderförmigen) und hohlen Vorsprung 43 auf, der, wenn der Gehäusedeckel 41 am Gehäuseteil 40 montiert ist, sich entlang der Rotationsachse in die Bohrung 11 hinein erstreckt. Der langgestreckte Vorsprung 43 wird auch als turmförmiges Element oder als "Sensor-Dom" bezeichnet. Im Inneren des hohlen Vorsprungs 43 ist ein Träger 34 angeordnet, auf dem ein oder mehrere Sensorelemente 31 montiert sind. Die auf dem Träger 34 Sensorelemente 31 sind empfindlich auf Magnetfelder. Der Träger 34 kann eine Platine (*printed circuit board, PCB*), ein Lead-Frame, ein Stanzgitter oder ähnliches sein.

In dem Hohlraum 42 des Gehäusedeckels 41 ist eine Platine 35 angeordnet, auf der die Sensorelektronik 32 angeordnet ist. Der Träger 34 ist ebenfalls mit der Platine 35 verbunden und ermöglicht somit eine elektrische Verbindung der Sensorelemente 31 mit der Sensorelektronik 32. Der Träger 34 steht annähernd im rechten Winkel von der Platine 35 ab. Die Sensorelektronik 32 ist dazu ausgebildet, die Sensorelemente 31 anzusteuern und die von den Sensorelementen 31 gelieferten Signale zu verarbeiten, um ein oder mehrere Messsignale zu erzeugen, welches die Winkelstellung oder die Drehbewegung der Welle 10 anzeigt. Geeignete Sensorelemente wie z.B. Hall-Sensoren oder magnetoresistive Sensoren sowie geeignete Sensorelektronik sind an sich bekannt und werden daher hier nicht weiter diskutiert. Die Sensorelektronik 32 kann eine Buchse mit Steckkontakten aufweisen, um mittels eines Steckers 40 ein Kabel 41 mit der Sensorelektronik 32 verbinden zu können. Das Kabel 41 verbindet (siehe auch Fig. 2) die Sensorelektronik 32 mit einer Ansteuereinheit 50 für den Elektromotor.

Der langgestreckte Vorsprung 43 (der Sensor-Dom) kann ein integraler Bestandteil des Gehäusedeckels 41 sein. In einem Beispiel ist der langgestreckte Vorsprung mit dem Hauptteil des Gehäusedeckels 41 (in dem sich der Hohlraum 43 befindet) fest verbunden, z.B. mittels einer Klebe- oder Schraubverbindung. Das Weiteren können der langgestreckte Vorsprung 43 und der Gehäusedeckel 41 aus einem Teil gefertigt sein (beispielsweise als Spritzgussteil aus Kunststoff).

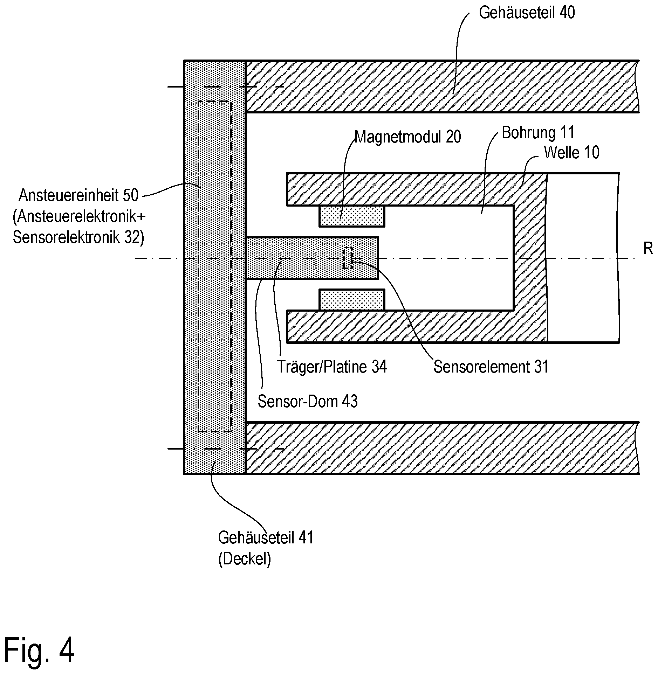

Fig. 4 illustriert ein weiteres Ausführungsbeispiel, welches es ermöglicht, das Kabel 41 und die zugehörigen Steckverbindung zwischen Sensorelektronik 32 und der Ansteuereinheit 50 für den Elektromotor M wegzulassen. In diesem Beispiel ist die für die Ansteuerung des Elektronmotors verwendete Elektronik (vgl. Fig. 2, Ansteuereinheit 50) wie z.B. ein Stromrichter (3-Phasen-Inverter) und dergleichen zusammen mit der Sensorelektronik 32 (vgl. Fig. 3) in das Gehäuseteil 41 integriert, welches gleichzeitig als Gehäusedeckel dient.

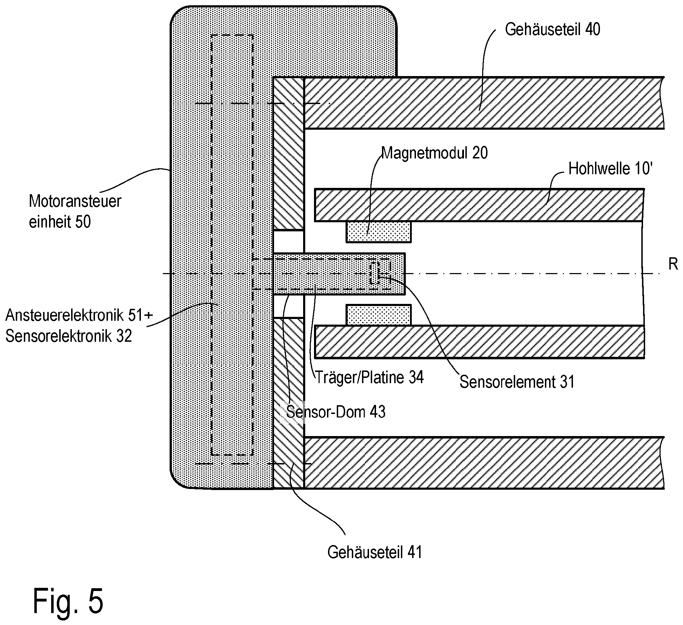

Das Beispiel aus Fig. 5 illustriert eine Modifikation des Beispiels aus Fig. 4, bei den das Gehäuseteil 41 ein gewöhnlicher Gehäusedeckel mit einer zentralen Öffnung ist. Alternativ kann das Gehäuseteil 41 auch Teil des Gehäuseteils 40 sein (Motorgehäuse). Die Ansteuereinheit 50 mit der Ansteuerelektronik 51 für den Elektromotor sowie die Sensorelektronik ist ein Modul mit einem separaten Gehäuse, welches (wie in den vorherigen Beispielen der Gehäusedeckel) einen hohlen Vorsprung 43 auf, der auch als Sensor-Dom bezeichnet wird. Der Vorsprung 43 ist ein turmförmiges Element, in dem das Sensorelement 31 auf einem Träger angeordnet ist (ähnlich wie in Fig. 3). Auch in diesem Beispiel sind Ansteuerelektronik 51 für den Elektromotor und Sensorelektronik samt Sensorelement 31 in demselben Modul angeordnet, und ein Kabel mit Steckverbinder zwischen Sensorelektronik und Ansteuerelektronik 51 wird nicht benötigt. Das Sensorelement 31 ist im Inneren der Ansteuereinheit 50 mit der Ansteuerelektronik 51 (elektrisch) gekoppelt. Dabei kann das Sensorelement auf einem Träger (z.B. einer Trägerplatine) angeordnet sein, wie dies z.B. in dem Beispiel aus Fig. 3 gezeigt ist.

Anders als in den vorherigen Beispielen wird gemäß Fig. 5 statt einer Welle mit Bohrung eine Hohlwelle 10' verwendet. Es versteht sich, dass auch in allen anderen, hier beschriebenen Ausführungsbeispielen statt einer Vollwelle mit axialer Bohrung eine Hohlwelle verwendet werden kann.

## Patentansprüche

1. Vorrichtung zur Messung einer Winkelposition einer Welle, wobei die Vorrichtung aufweist:
ein Gehäuse, das ein erstes Gehäuseteil (40) und ein zweites Gehäuseteil (41) umfasst,
eine in dem ersten Gehäuseteil (40) angeordnete und um eine Rotationsachse drehbare Welle (10), die eine Bohrung (11) aufweist, die sich von einer Stirnseite der Welle (10) entlang der Rotationsachse erstreckt;
eine Magneteinheit (20) mit mindestens einem Permanentmagneten, der innerhalb der Bohrung (11) angeordnet und an der Welle (10) befestigt ist;
wobei das zweite Gehäuseteil (41) einen Vorsprung (43) aufweist, der sich entlang der Rotationsachse in die Bohrung (11) hinein erstreckt;
wobei die Vorrichtung weiter eine Sensoreinheit (30) aufweist, die ein auf einem Träger (34) angeordnetes Magnetfeld-Sensorelement (31) umfasst, wobei der Träger (34) im Inneren des Vorsprungs (43) des zweiten Gehäuseteils (41) angeordnet ist,
wobei der Vorsprung (43) ein integraler Bestandteil des zweiten Gehäuseteils (41) ist, wobei der Vorsprung (43) hohl ist und das Magnetfeld-Sensorelement (31) in dem hohlen Vorsprung (43) angeordnet ist,
wobei das zweite Gehäuseteil (41) einen Gehäusedeckel für das erste Gehäuseteil (40) bildet,
wobei das zweite Gehäuseteil (41) eine zentrale Öffnung aufweist, durch welche die Sensoreinheit (30) gesteckt werden kann.

2. Die Vorrichtung gemäß Anspruch 1,
wobei im Inneren des zweiten Gehäuseteils (41) eine Trägerplatine (35) mit Sensorelektronik angeordnet ist.

3. Die Vorrichtung gemäß Anspruch 1 oder 2,
wobei die Welle (10) die Motorwelle eines Elektromotors ist.

4. Die Vorrichtung gemäß Anspruch 3,
wobei im Inneren des zweiten Gehäuseteils (41) eine Ansteuereinheit (50) zur Ansteuerung des Elektromotors angeordnet ist.

5. Die Vorrichtung gemäß einem der Ansprüche 1 bis 4,
wobei die Bohrung (11) ein Durchgangsloch und folglich die Welle (10) eine Hohlwelle ist.

## Claims

1. Apparatus for measuring an angular position of a shaft, wherein the apparatus has:
a housing which comprises a first housing part (40) and a second housing part (41),
a shaft (10) which is arranged in the first housing part (40) and can rotate about a rotation axis and has a bore (11) which extends along the rotation axis from an end side of the shaft (10);
a magnet unit (20) with at least one permanent magnet which is arranged within the bore (11) and is fastened to the shaft (10) ;
wherein the second housing part (41) has a projection (43) which extends along the rotation axis into the bore (11);
wherein the apparatus furthermore has a sensor unit (30) which comprises a magnetic field sensor element (31) which is arranged on a support (34), wherein the support (34) is arranged in the interior of the projection (43) of the second housing part (41),
wherein the projection (43) is an integral constituent part of the second housing part (41), wherein the projection (43) is hollow and the magnetic field sensor element (31) is arranged in the hollow projection (43),
wherein the second housing part (41) forms a housing cover for the first housing part (40),
wherein the second housing part (41) has a central opening through which the sensor unit (30) can be inserted.

2. Apparatus according to Claim 1,
wherein a mounting board (35) with sensor electronics is arranged in the interior of the second housing part (41).

3. Apparatus according to Claim 1 or 2,
wherein the shaft (10) is the motor shaft of an electric motor.

4. Apparatus according to Claim 3,
wherein an actuation unit (50) for actuating the electric motor is arranged in the interior of the second housing part (41) .

5. Apparatus according to one of Claims 1 to 4,
wherein the bore (11) is a passage hole and consequently the shaft (10) is a hollow shaft.

## Revendications

1. Dispositif de mesure de la position angulaire d'un arbre,
dans lequel le dispositif comporte :
un boîtier, qui comprend une première partie (40) de boîtier et une deuxième partie (41) de boîtier,
un arbre (10), qui est monté dans la première partie (40) du boîtier, qui tourne autour d'un axe de rotation et qui a un alésage (11), qui s'étend d'un côté frontal de l'arbre (10) le long de l'axe de rotation ;
une unité (20) magnétique ayant au moins un aimant permanent, qui est disposé à l'intérieur de l'alésage (11) et qui est fixé à l'arbre (10) ;
dans lequel la deuxième partie (41) du boîtier a une saillie (43), qui s'étend le long de l'axe de rotation à l'intérieur de l'alésage (11) ;
dans lequel le dispositif comporte en outre une unité (30) à capteur, qui comprend un élément (31) à capteur du champ magnétique monté sur un support (34), le support (34) étant disposé à l'intérieur de la saillie (43) de la deuxième partie (41) du boîtier,
dans lequel la saillie (43) est une partie constitutive intégrale de la deuxième partie (41) du boîtier, dans lequel la saillie (43) est creuse et l'élément (31) à capteur du champ magnétique est disposé dans la saillie (43) creuse,
dans lequel la deuxième partie (41) du boîtier forme un couvercle de boîtier pour la première partie (40) du boîtier,
dans lequel la deuxième partie (41) du boîtier a une ouverture centrale, dans laquelle l'unité (30) à capteur peut être enfoncée.

2. Dispositif suivant la revendication 1,
dans lequel à l'intérieur de la deuxième partie (41) du boîtier est disposé une platine (35) de support ayant une électronique de capteur.

3. Dispositif suivant la revendication 1 ou 2,
dans lequel l'arbre (10) est l'arbre d'un moteur électrique.

4. Dispositif suivant la revendication 3,
dans lequel une unité (50) de commande pour la commande du moteur électrique est disposée à l'intérieur de la deuxième partie (41) du boîtier.

5. Dispositif suivant l'une des revendications 1 à 4,
dans lequel l'alésage (11) est un trou traversant et en conséquence l'arbre (10) est un arbre creux.
